Europäisches Patentamt

(19) **European Patent Office**

Office européen des brevets

(11) Publication number: **0 059 779**
A2

(12) # EUROPEAN PATENT APPLICATION

(21) Application number: **81105949.2**

(22) Date of filing: **28.07.81**

(51) Int. Cl.³: **A 63 F 9/22**

(30) Priority: **06.03.81 JP 31657/81**

(43) Date of publication of application:
**15.09.82 Bulletin 82/37**

(84) Designated Contracting States:
**BE DE FR IT**

(71) Applicant: **CORONA CO., LTD.**
**3-17-10, Tarumicho Suita-shi**
**Osaka(JP)**

(72) Inventor: **Sasaki, Shigeto**
**811 Akatsuki Heights 10-7 Toyotsucho**
**Suita-shi Osaka(JP)**

(74) Representative: **Fleuchaus, Leo, Dipl.-Ing. et al,**
**Fleuchaus & Wehser Melchiorstrasse 42**
**D-8000 München 71(DE)**

(54) **Video game device.**

(57) A video game device in which a score gained in a game is held for a certain time period set by a timer means and when a premium button is pushed during the lapse of certain time period, the score is multiplied by a certain premium magnification, characterized in that a premium adding means is arranged permitting an optional number to be successively selected in a certain cycle from plural numbers previously set during the operation of timer means and the score to be multiplied by a number selected as a premium magnification at the time when the premium button is pushed.

EP 0 059 779 A2

./...

Croydon Printing Company Ltd.

FIG.4

. Background of the Invention

There have become remarkably popular these days video game devices wherein a variety of games are projected on television screen and players enjoy playing the games to score against the others.

With conventional video game devices of this type, each of players speculates a part or all of his carrying score in the game to be played on television screen before the game is started, and a score gained when he wins the game is simply added to his carrying score.

Therefore, when he loses the game, his score speculated in the game is lost to thereby decrease his carrying score. His competitive spirit is thus excited to make a good score over the others'. However, these video game devices serve only to cause players to enjoy competing with the others for the score of game, and are lack of unexpectedness and novelty which are essential to these amusement devices. Accordingly, as become used to the games, players lose their interest in playing the games and these video game devices can not keep their value as an article of commerce for a long time.

Summary of the Invention

The object of the present invention is to provide a video game device full of unexpectedness and novelty and capable of keeping its value as an article of commerce for a long time, said video game device having a means for adding a premium to the score gained in the game whereby a further chance to invest the score gained in the game is prepared in addition to the competition of score in the game to increase or decrease the score with a leap.

## Brief Description of the Drawings

Fig. 1 is a perspective view showing an embodiment of the present invention;

Fig. 2 shows an image on the screen of embodiment shown in Fig. 1;

Fig. 3 shows roughly a flickering display section and a time display section of embodiment shown in Fig. 1;

Fig. 4 is a block diagram showing the embodiment shown in Fig. 1; and

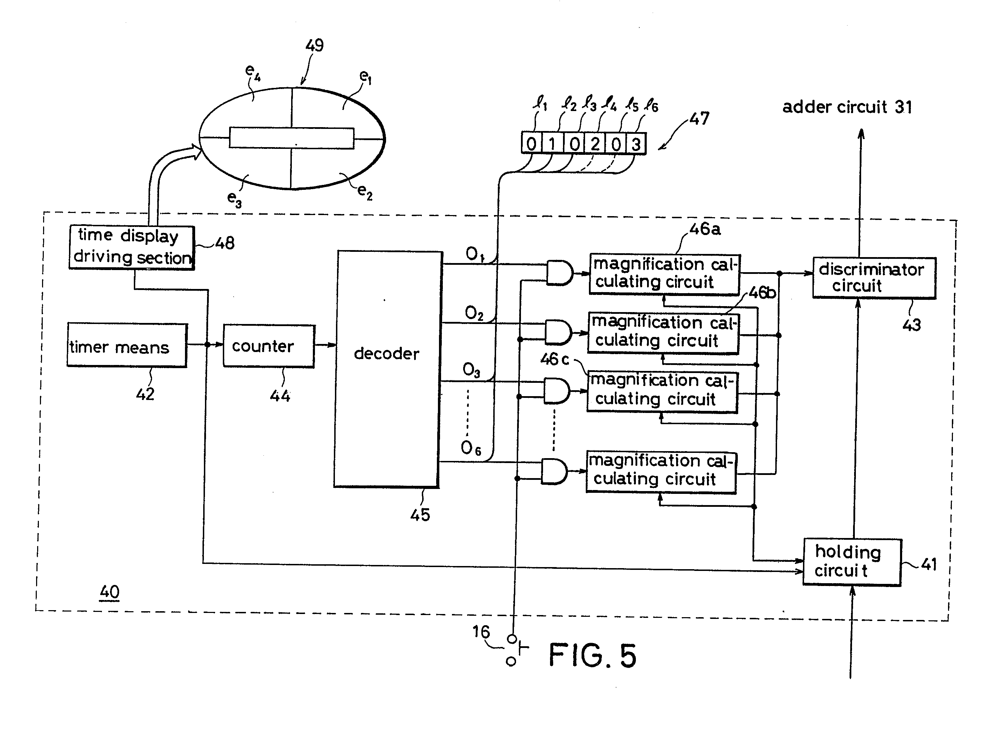

Fig. 5 is a block diagram showing a premium adding means of embodiment shown in Fig. 1.

## Detailed Description of the Preferred Embodiment

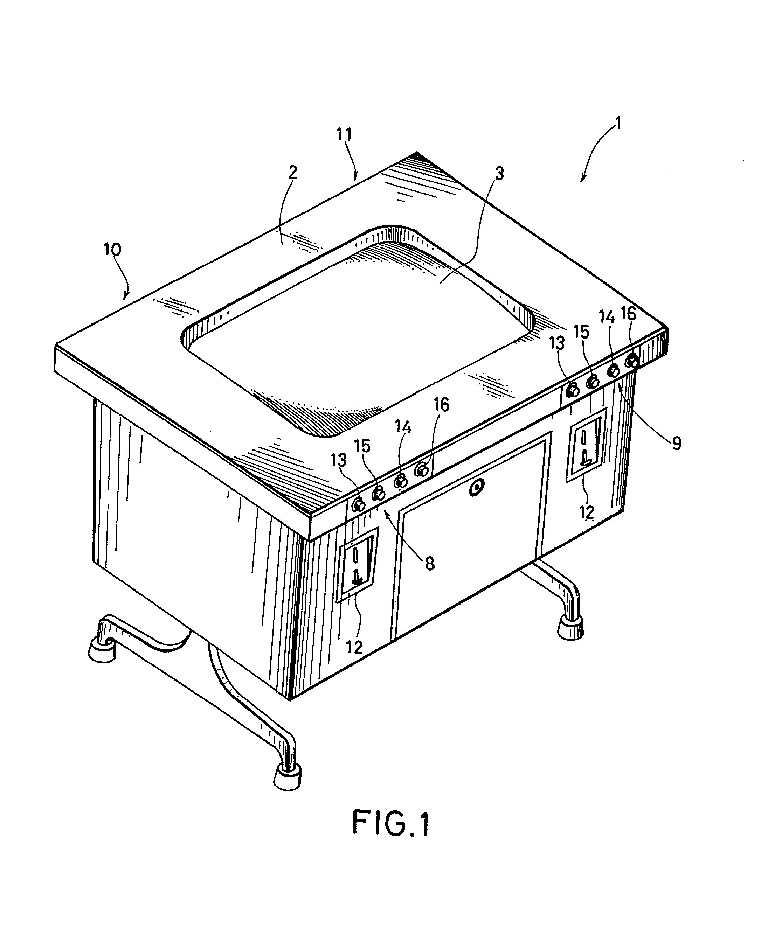

Referring to Fig. 1, numeral 1 represents a body of video game device, which has a table plate 2 and a cathode ray tube 3 arranged in the center of table plate 2, said cathode ray tube 3 serving to project on the screen thereof horse races and a score display frame for displaying bet scores, carrying scores and the like.

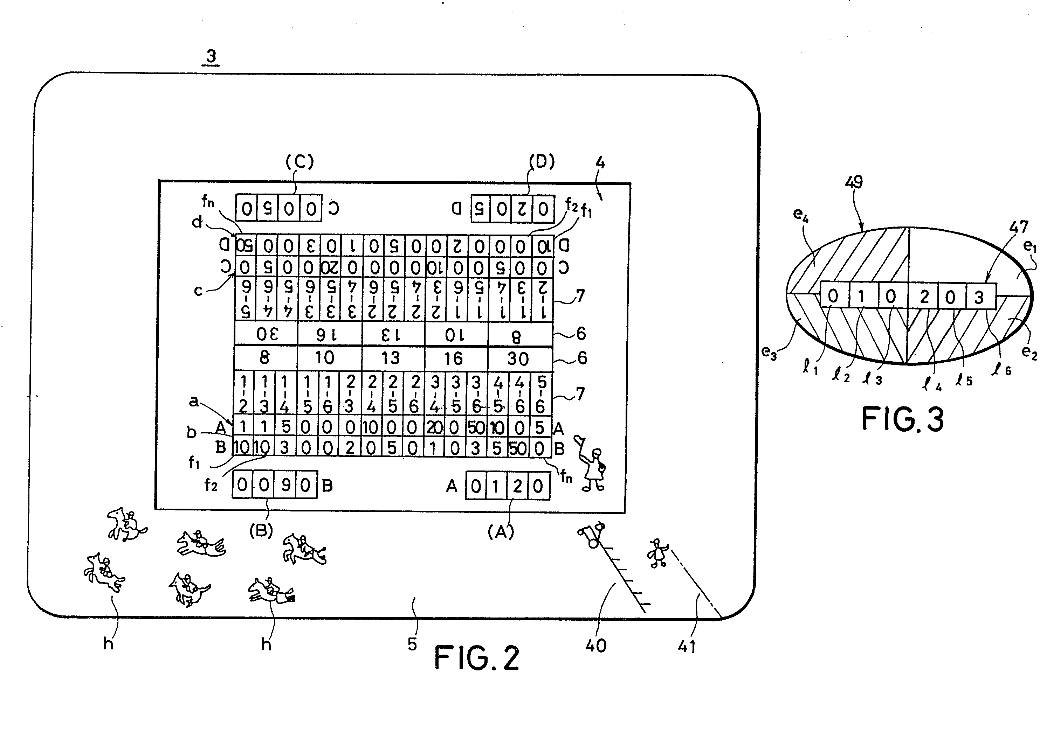

As shown in Fig. 2, the score display frame 4 is arranged in the center of screen of cathode ray tube 3 and a track 5 on which racing horses (h) run is arranged around the score display frame 4.

The score display frame 4 is divided into two along the longitudinal center line of table plate 2, each having a multiple display frame 6, a frame 7 for displaying combinations of horse numbers, bet frames a and b or c and d including bet blocks $f_1$, $f_2$, ..., $f_n$ corresponding to respective combinations of horse numbers, and carrying score display frames (A) and (B) or (C) and (D) each arranged under one end of bet frame and displaying the carrying score owned by one of four players.

Each of players can bet any desired score to the extent of his carrying score displayed in his carrying score display frame (A), (B), (C) or (D) on any of bet blocks $f_1$, $f_2$, ..., $f_n$ in his bet frame a, b, c or d.

A pair of operational sections 8 and 9 or 10 and 11 are arranged on each of both longer sides of body 1 and a coin slot 12 is arranged under each of operational sections 8, 9, 10 and 11.

In each of operational sections 8, 9, 10 and 11 are arranged two selection buttons 13 and 14 for selecting bet blocks and being spaced by a predetermined distance, about 10 cm, for example, from each other, and a bet button 15 between selection buttons 13 and 14. When the left selection button 13 is pushed once, a bet block flickering in each of bet frames a, b, c and d is shifted one block to the left side and when the right selection button 14 is pushed once, the flickering bet block is shifted one block to the right side. Namely, every push of selection button 13 or 14 causes the flickering bet block to be shifted one block to the left or right side, thus allowing any of bet blocks $f_1$, $f_2$, ..., $f_n$ to be selected by the operation of selection buttons 13 and 14. On the other hand, every push of bet button 15 causes count one to be added to the score displayed in the bet block which has been selected by the operation of selection buttons 13 and 14.

On the right side of selection button 14 is further arranged a premium button 16 which will be described later.

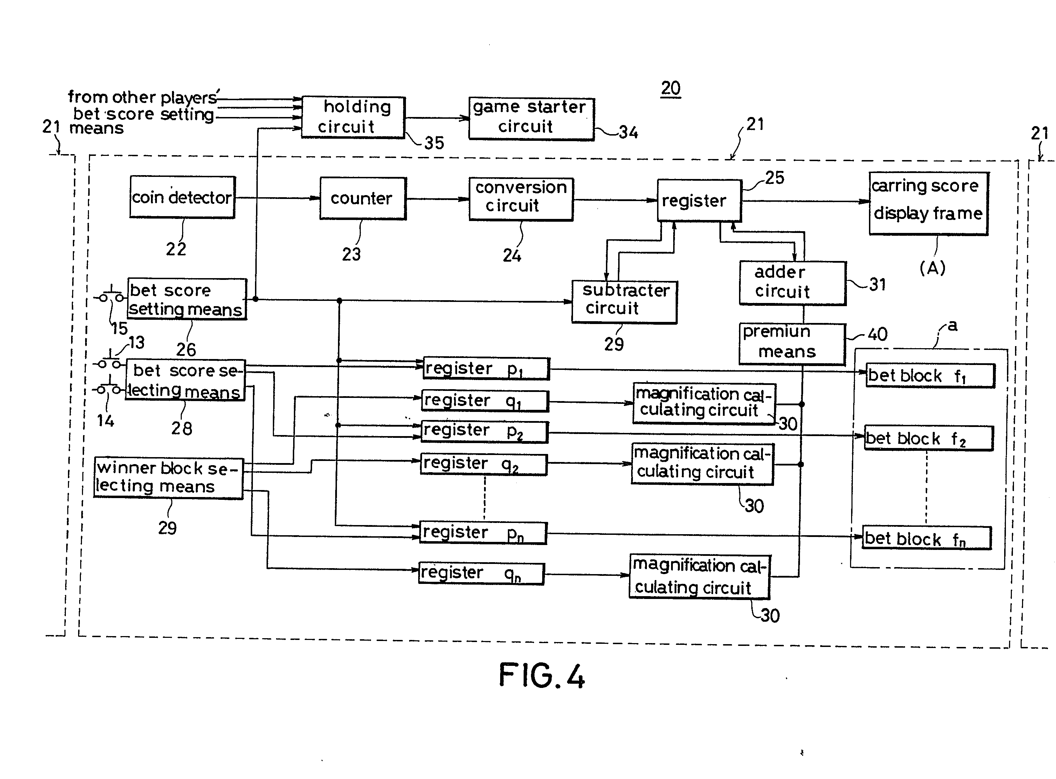

In the body 1 of video game device is housed a control means 20 shown in Fig. 4. In addition to a circuit arrangement 21 shown in a dotted line in Fig. 4, the control means 20 includes three other circuit arrangements (not shown) same as the circuit arrangement 21 and these circuit arrangements correspond to operational sections 8, 9, 10 and 11, respectively.

To describe the circuit arrangement 21, numeral 22 denotes a coin detector, which serves to detect coins put into the coin slot 12 and apply signals to a counter 23 responsive to the number of coins inserted. The counter 23 counts these signals and applies a counted number to a conversion circuit 24, which multiplies the counted number by a conversion ratio (1/10, for example) and the result is stored in a register 25. The value stored in the register 25 is displayed, as a player's carrying score, in one of carrying score display frames (A), (B), (C) and (D) on the screen of cathode ray tube 3. A bet block selecting means 28 causes the flickering one of bet blocks $f_1$, $f_2$, ..., $f_n$ in one of bet frames a, b, c and d to be shifted one block to the right or left side by every pushing operation of selection buttons 13 and 14 and applies a selection signal through an AND gate to a register of registers $P_1$, $P_2$, ..., $P_n$ arranged corresponding to bet blocks $f_1$, $f_2$, ..., $f_n$, said register corresponding to the flickering bet block.

A bet score setting means 26 applies a pulse signal through an AND gate to one of registers $P_1$, $P_2$, ..., $P_n$ every time when the bet button 15 arranged on the input side is pushed, thus causing the register to which the selection signal has been applied from the selection means 28 to be shifted count one. Bet scores stored in some registers of $P_1$, $P_2$, ..., $P_n$ are displayed in those of bet blocks $f_1$, $f_2$, ..., $f_n$ in one of bet frames a, b, c and d on the screen of cathode ray tube 3 which correspond to registers in which bet scores have been stored. The pulse signal outputted from the bet score setting means 26 is applied to a subtracter circuit 29, which subtracts count one every pulse signal from the carrying score stored in the register 25, and the result thus obtained is stored in the register 25 and also displayed in one of carrying score display frames (A), (B), (C) and (D). Registers $q_1$, $q_2$, ..., $q_n$ are arranged corresponding to registers $P_1$, $P_2$, ..., $P_n$ and bet scores stored in some of registers $P_1$, $P_2$, ..., $P_n$ are transferred as they are to those of registers $q_1$, $q_2$, ..., $q_n$ which correspond to registers in which bet scores have been stored.

Registers $q_1$, $q_2$, ..., $q_n$ are selected by a selection signal outputted from a winner block selecting means 29 and one of registers $q_1$, $q_2$, ..., $q_n$ to which the selection signal has been applied outputs the bet score stored therein to its corresponding magnification calculating circuit 30.

The winner block selecting means 29 starts its operation after one game of horse races is finished. When one game of horse races is finished, signals corresponding to horse numbers of racing horses run through the goal in first and second are applied to the winner block selecting means 29, which selects the bet block according to signals, said bet block corresponding to the combination of horse numbers of first and second racing horses, and applies a selection signal to that one of registers $q_1$, $q_2$, ..., $q_n$ which corresponds to the bet block.

Values displayed in multiple display frame 6 in Fig. 2 are set as magnifications in magnification calculating circuits 30, respectively, and the magnification calculating circuit 30 corresponding to that one of registers $q_1$, $q_2$, ..., $q_n$ to which the selection signal has been applied from the winner block selecting means 29 multiplies the bet score outputted from the register by its magnification and applies the result thus obtained to a premium means 40 shown in Fig. 4, for example.

The score outputted to the premium means 40 is held in a holding circuit 41 for a certain time period. The premium means 40 includes a timer means 42 for generating a clock pulse for a certain time period, ten and several seconds, for example, every time when the program of one game of horse races is finished, and applying the clock pulse to the holding circuit 41, which holds the score for the certain time period during which the clock pulse continues to be outputted from the timer means 42, and outputs the score to a discriminator circuit 43 at the time when the supply of clock pulse is stopped.

The clock pulse outputted from the timer means 42 is applied to a counter 44 which is formed by several bits, for example, and the value calculated by the counter 44 is applied to a decoder 45 to successively output a pulse signal through output lines $O_1$, $O_2$, $O_3$, ... of decoder 45 in a certain cycle. Each of output lines $O_1$, $O_2$, $O_3$, ... of decoder 45 is connected through an AND gate to each of magnification calculating circuits 46a, 46b, 46c, ... and that one of magnification calculating circuits 46a, 46b, 46c, ... to which a scanning signal is outputted from the decoder 45 carries out the calculation of premium magnification. Optional premium magnifications such as 0, 1, 0, 2, 0 and 3, for example, are set in magnification calculating circuits 46a, 46b, 46c, ..., respectively, and the score held by the holding circuit 41 is stored in each of magnification calculating circuits, so that only one of magnification calculating circuits to which the pulse signal is applied from the decoder 45 multiplies the score by its premium magnification to be applied to the discriminator circuit 43 as a premium-added score.

A signal outputted responsive to the pushing operation of premium button 16 is supplied through the AND gate to each of magnification calculating circuits 46a, 46b, 46c, ... and only that one of magnification calculating circuits to which the scanning signal is applied from the decoder 45 at the instant when the premium button 16 is pushed starts to practice the calculation.

Scanning signals outputted from output lines $O_1$, $O_2$, $O_3$, ... of decoder 45 are applied to a plurality of blocks $\ell_1$, $\ell_2$, $\ell_3$, ... of a flickering display section 47 shown in Fig. 3 so as to successively shift the lighted block to the right or left side one by one.

Premium magnifications 0, 1, 0, 2, 0, 3 which are set in magnification calculating circuits 46a, 46b, 46c, ... are displayed in blocks $\ell_1$, $\ell_2$, $\ell_3$, ..., respectively, and successively lighted according to the supply of scanning signals. The speed at which blocks $\ell_1$, $\ell_2$, $\ell_3$, ... are successively turned on and off to the right or left side is determined by the cycle of clock pulses outputted from the timer means 42 but adjusted in such a way that it can be sensed by eyes of player but not followed by the pushing operation of premium button 16. Clock pulses outputted from the timer means 42 are applied to a time display driving section 48 causing a time display section 49 to display the lapse of time set in the timer means 42. As shown in Fig. 3, the time display section 49 includes four display areas $e_1$, $e_2$, $e_3$ and $e_4$ arranged around the flickering display section 47, and these display areas $e_1$, $e_2$, $e_3$ and $e_4$ are successively turned off every time when a quarter of time set in the timer means 42 lapses, thus allowing the lapse of time to be sensed by eyes of player. Flickering display section 47 and time display section 49 are arranged on the screen of cathode ray tube 3 adjacent to each of operational sections 8, 9, 10 and 11.

When the predetermined time set in the timer means 42 lapses, the score held in the holding circuit 41 is transferred to the discriminator circuit 43, which discriminates whether or not the premium button 16 is pushed during the lapse of said time. When the premium button 16 is pushed, the discriminator circuit 43 outputs to the adder circuit 31 the premium-added score applied from one of magnification calculating circuits 46a, 46b, 46c, ... and the score held in the holding circuit 43, when the premium button 16 is not pushed.

The adder circuit 31 adds the score outputted from the discriminator circuit 43 with the carrying score stored in the register 25.

Description about other three circuit arrangements is omitted because they are same in construction as the circuit arrangement 21. The control means 20 further includes a game starter circuit 34 and a holding circuit 35, said game starter circuit 34 serving to start the program of horse racing game and the holding circuit 35 to hold the start of program for a while. The holding circuit 35 is provided with OR gates and the like arranged on the input side thereof, and output signals are applied from bet score setting means 26 of block circuits to the holding circuit 35 via OR gates.

When a pulse signal is outputted from any one of bet score setting means 26, the operation of game starter circuit 34 is stopped but started when a predetermined time, three seconds, for example, lapses after the supply of pulse signal is stopped.

When several pieces of coins are put into the coin slot 12 arranged in each of operational sections 8, 9, 10 and 11, the number of coins inserted in converted by the conversion circuit 24 to be stored in the register 25 and to be displayed as a player's carrying score in his carrying score display section (A), (B), (C) or (D) on the screen of cathode ray tube 3.

When the selection button 13 or 14 arranged in each of operational sections 8, 9, 10 and 11 is pushed, the flickering one of bet blocks $f_1$, $f_2$, $f_3$, ..., $f_n$ in one of bet frames a, b, c and d is shifted to the right or left side one by one.

In this case the bet block seleting means 28 successively selects registers $P_1$, $P_2$, ..., $P_n$ synchronizing with the shift of fickering one of bet blocks $f_1$, $f_2$, ..., $f_n$ and applies a selection signal to one of registers $P_1$, $P_2$, ..., $P_n$ corresponding to the flicker bet block.

When the bet button 15 arranged in each of operational sections 8, 9, 10 and 11 is then pushed, the bet score setting means 26 outputs a pulse signal to one of registers $P_1$, $P_2$, ..., $P_n$ which has been selected by the bet block selecting means 28, and the score corresponding to the number of pushing operation of bet button 15 is stored in that register while displayed in that one of bet blocks $f_1$, $f_2$, ..., $f_n$ in one of bet frames a, b, c and d.

The bet score is subtracted by the subtracter circuit 29 from the carrying score stored in the register 25 and the carrying score from which bet scores displayed in some of bet blocks $f_1$, $f_2$, ..., $f_n$ in each of bet frames a, b, c and d are subtracted is displayed in each of carrying score display sections (A), (B), (C) and (D).

Repeatedly pushing selection buttons 13, 14 and bet button 15, each of players sets his bet scores successively in his bet frame a, b, c or d.

When each of players finishes the setting of his bet scores, the supply of pulse signal applied from the bet score setting means 26 in each of circuit arrangements 21 is stopped, so that the holding circuit 35 makes the game starter circuit 34 operative after the lapse of predetermined time, three seconds, for example, to thereby cause the program of horse racing game to be practiced. Namely, when racing horses (h) are lined in a gate 40 and the pushing operation of each of bet buttons 15 is finished, a rope 41 is stretched, the gate 40 is opened after the lapse of three seconds, and racing horses (h) run out simultaneously. When racing horses (h) run through the goal, horse numbers of racing horses run through the goal in first and second are transferred to the winner block selecting means 29, which outputs a selection signal to that one of registers $q_1$, $q_2$, ..., $q_n$ which corresponds to the combination of horse numbers of racing horses run through the goal in first and second. On the other hand, scores stored in registers $P_1$, $P_2$, ..., $P_n$ are transferred as they are to registers $q_1$, $q_2$, ..., $q_n$, respectively, and therefore, the bet score stored in that one of registers $q_1$, $q_2$, ..., $q_n$ to which the selection signal is applied is outputted to the magnification calculating circuit 30, which multiplies the bet score and applies to the premium means 40 the result thus obtained.

The timer means 42 is rendered operative in the premium means 40 every time when the program of horse racing game is finished, and blocks $\ell_1$, $\ell_2$, $\ell_3$, ... in the flickering display section 47 are successively turned on and off according to the start of scanning of decoder 45 while the lapse of time is displayed by the time display section 49.

When the premium button 16 is not pushed during the lapse of time set in the timer means 42, that is, when the premium button 16 is not pushed until all of display areas $e_1$, $e_2$, $e_3$ and $e_4$ of time display section 49 are turned off, the score held in the holding circuit 41 is outputted as it is to the adder circuit 31 and a chance to challenge a further speculation using as a capital the score gained in a horse racing game is abandoned in this case.

On the other hand, when the premium button 16 is pushed until all of display areas $e_1$, $e_2$, $e_3$ and $e_4$ of time display section 49 are turned off, that one of magnification calculating circuits 46a, 46b, 46c, ...
to which a scanning signal is applied from the decoder
45 at the instant when the premium button 16 is pushed
is made operative to multiply the score by a premium
magnification set therein and to output the result as a
premium-added score to the adder circuit 31. Premium
magnifications include high ones such as 2 and 3 but
also include zero. Therefore, there is a case where
the score gained in a horse racing game is lost by this
speculation chance.

The score transferred to the adder circuit 31 is
added with the carrying score stored in the register 25
and the result thus added is simultaneously displayed
in one of carrying score display sections (A), (B),
(C) and (D).

According to the present invention, the chance is
provided to challenge a further speculation using as a
capital the score gained in a horse racing game and it
is decided by each of players whether or not the chance
is adopted, that is, it can be freely selected by
pushing the premium button 16 arranged in each of
operational sections 8, 9, 10 and 11 whether or not
the chance is adopted. Therefore, in addition to the
pleasure of a game in which a score could be gained in
a horse race, players can enjoy the chance to challenge
a further speculation using as a capital the score
gained in the horse race. Accordingly, the video game device according to the present invention is full of unexpectedness and novelty which are essential to amusement devices of this type, and can keep its value as an article of commerce for a long time with the increase of players attracted.

The premium button 16, selection buttons 13, 14 and bet button 15 are centered in each of operational sections 8, 9, 10 and 11, so that speedy operation can be carried out to play the game.

Although the present invention has been described referring to the horse racing game, it should be understood that the present invention can be applied to a variety of game devices.

What is claimed is:

1. A video game device in which a score gained in a game is held for a certain time period set by a timer means and when a premium button is pushed during the lapse of said certain time period, the score is multiplied by a certain premium magnification, characterized in that a premium adding means is arranged permitting an optional one to be successively selected in a certain cycle from plural numbers previously set during the operation of said timer means and the score to be multiplied by a number selected as a premium magnification at the time when the premium button is pushed.

2. A video game device according to claim 1 wherein the premium button is arranged adjacent to bet block selecting buttons and a bet score setting button.

1/4

0059779

**FIG.1**

FIG.2

FIG.3

FIG.4

FIG. 5

adder circuit 31

0059779

1/4